# EUROPEAN PATENT SPECIFICATION

(11) **EP 1 931 010 B1**
(45) Date of publication and mention of the grant of the patent: **25.03.2015**
(21) Application number: 07290899.9
(22) Date of filing: 18.07.2007
(51) Int. Cl.: H02J 7/00, A47L 9/28

(54) **Method for charging service robot**
Verfahren zur Ladung eines Dienstroboters
Procédé de chargement d'un robot de service

(30) Priority: 06.12.2006 KR 20060123050
(43) Date of publication of application: 11.06.2008
(60) Divisional application: 14160618.6
(73) Proprietor: Samsung Electronics Co., Ltd., Suwon-si, Gyeonggi-do, 443-742 (KR)
(72) Inventor: Ko, Jang-youn, Unnam-dong, Gwangsan-gu, Gwangju-city (KR); Jeung, Sam-jong, Singa-dong, Gwangsan-gu, Gwangju-city (KR); Song, Jeong-gon, Gwangsan-gu, Gwangju-city (KR); Kim, Myeong-ho, Unnam-dong, Gwangsan-gu, Gwangju-city (KR); Lee, Ju-sang, Sanweol-dong, Gwangsan-gu, Gwangju-city (KR); Kim, Kyoung-woung, Singa-dong, Gwangsan-gu, Gwangju-city (KR); Lee, Hak-bong, Gwangsan-gu, Gwangju-city (KR)
(74) Representative: Grünecker, Kinkeldey, Stockmair & Schwanhäusser

(56) References cited:
- GB-A- 2 394 796
- US-A- 5 646 494
- US-A- 5 787 545
- US-A1- 2006 220 610

## Description

### BACKGROUND OF THE INVENTION

### 1. Field of the Invention

The present invention relates to a service robot, and more particularly, to a method for charging a service robot for a vacuum cleaner.

### 2. Description of the Related Art

Generally, service robots are designed to assist people by moving around automatically without user manipulation, and cleaning a surface by drawing in foreign materials such as dust.

Service robots have a distance sensor or a photographing unit, which confirms the presence or absence of obstacles, or the distance of objects such as devices, office equipment or walls in a given area, in order to be able to clean without undesirable collisions or obstruction. An exemplary service robot may include a left driving wheel, a right driving wheel, and a driven wheel, all on the lower part of a cleaner body. Each of the driving wheels is driven in association with a driving motor. The driving motor is controlled by a controller, enabling the cleaner body to change directions.

The robot may have a suction port on a lower part of the body, to draw in foreign substances such as dust from a surface being cleaned. The suction port is subject to a suction force which is generated from a suction motor additionally provided to the cleaner body. The suction port is fluidly connected with a dust-collecting chamber which is provided inside the cleaner body. The in-drawn foreign material is collected and stored in the dust-collecting chamber.

The controller of the service robot checks the battery capacity to determine whether a power source is sufficient for driving the robot. If the controller determines that the battery should be charged, the service robot may communicate with a charging apparatus located at a predetermined position to find and move toward the position of the charging apparatus. A connecting terminal on the service robot may then be connected to a charging terminal on the charging apparatus. In other words, if the charging terminal and connecting terminal are connected to each other, the controller may be in charge mode until the battery power source becomes fully charged. During charging, other operations of the service robot may be halted. For example, the driving mode of the driving wheels and the cleaning mode may be disabled during charging.

When the charging terminal on the charging apparatus loses contact with the connecting terminal on the service robot during charging due to an earthquake, a strong shock on the floor surface, or unintentional contact with a user, or when the power source is interrupted due to power failure during charging or connecting terminals are in contact with each other, the service robot may automatically detect an inductive signal output from the charging apparatus and attempt to dock with the charging apparatus again.

However, when power failure occurs, the power source of the charging apparatus is interrupted or the charging apparatus is out of order, the charging apparatus can not output a charging apparatus recognition signal, so that the service robot can wander from place to place in order to locate the charging apparatus. As a result, the service robot may remain in a halted state because of the battery discharge.

GB 2 394 796 A refers to a docking robot cleaner system with external charger. The robot cleaner system is capable of accurately docking with an external charging apparatus comprising a power supply terminal supported by a terminal stand and connected to a supply of utility power. The cleaner comprises a driving unit, an upper camera disposed on the cleaner body, for photographing a ceiling, a battery which is charged by power supplied from the power supply terminal through charger terminals, and a bumper disposed along an outer circumference of the cleaner body and outputting a collision signal when a collision with an obstacle is detected. Prior to starting a cleaning operation, the cleaner, which is located at the power supply terminal photographs an upward-looking view using the upper camera, calculates and stores location information of the external charging apparatus. When the battery charge has fallen to a predetermined level in use or the cleaning operation is finished, the cleaner determines its current location based on information from a view photographed by the upper camera, calculates a return path from the current location and the stored location information, and returns to the external charging apparatus along the return path.

US 5 787 545 A refers to an automatic machine and device for floor dusting comprising a self-contained mobile machine provided with two wheels and a suction means, a dust-container, an obstacle avoiding and detection means and an electronic control unit having a microprocessor. The device is also provided with a central device for discharging the dust, said device being stationary and associated to a guiding means enabling the mobile self-contained machine to reach the central dust and discharge device for emptying periodically the dust container. The device is also comprised of a charging unit integrated to the central device to recharge the rechargeable batteries contained in the mobile machine. The microprocessor is associated to an algorithm for avoiding the obstacles and searching the central suction device and the charging unit.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

It is the object of the present invention to provide an improved method for charging a service robot, which prevents the service robot from returning to a charging mode when supply of electricity fails, the power source of a charging apparatus is blocked, or a user intentionally interrupts the charging process.

This object is solved by the subject matter of the independent claims.

Preferred embodiments are defined by the dependent claims.

According to an aspect of the present invention, there is provided a method for charging a service robot, the method comprising: (a) docking an input terminal of the service robot with an output terminal of a charging apparatus , if an available battery power source falls below a predetermined level; (b) checking whether a predetermined charging voltage is input to the input terminal of the service robot; (c) determining whether power failure has occurred or the charging apparatus is out of order, if the charging voltage is-not input in step (b); and (d) interrupting charging of the battery, if it is determined that power failure has occurred or the charging apparatus is out of order.

Step (c) may comprise determining that power failure has occurred or the charging apparatus is out of order, if an inductive signal is not output from the charging apparatus.

Step (c) may further comprise returning to step (a), if the inductive signal is output from the charging apparatus.

Step (c) may comprise (c-1) moving the service robot forward toward the output terminal using a predetermined pressing force; and (c-2) determining that power failure has occurred or the charging apparatus is out of order, if the charging voltage is not input to the input terminal.

Step (c-1) may be repeated twice or more.

Step (c-2) may further comprise returning to step (b), if the charging voltage is input to the input terminal.

According to another aspect of the prevent invention, there is provided a method for charging a service robot, the method comprising (a) docking an input terminal of the service robot with an output terminal of a charging apparatus, if an available battery power source falls below a predetermined level; (b) checking whether a predetermined charging voltage is input to the input terminal of the service robot; (c) determining whether a user has lifted the service robot from the ground, if the predetermined voltage is not input in step (b); and (d) interrupting charging of the battery if it is determined that a user has lifted the service robot from the ground, and returning to step (a) if it is determined that a user has not lifted the service robot from the ground.

Step (c) may comprise determining that a distance between the service robot and the floor surface exceeds a predetermined distance, using a floor detection sensor placed on the service robot.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a perspective view illustrating a service robot for explanation of a method for charging a service robot according to an exemplary embodiment of the present invention;

FIG. 2 is a block diagram illustrating a charging apparatus and the service robot of FIG. 1;

FIG. 3 is a schematic side view of a service robot for explanation of the charging state of the service robot illustrated in FIG. 1;

FIG. 4 is a flowchart explaining a method for charging a service robot according to an exemplary embodiment of the present invention;

FIG. 5 is a flowchart explaining a method for charging a service robot according to another exemplary embodiment of the present invention;

FIG. 6 is a flowchart explaining a method for charging a service robot according to still another exemplary embodiment of the present invention; and

FIG. 7 is a schematic side view illustrating the state in which a service robot is lifted from the ground.

### DETAILED DESCRIPTION OF THE EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

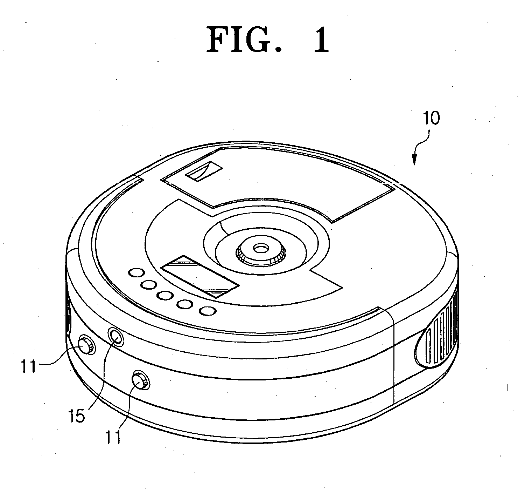

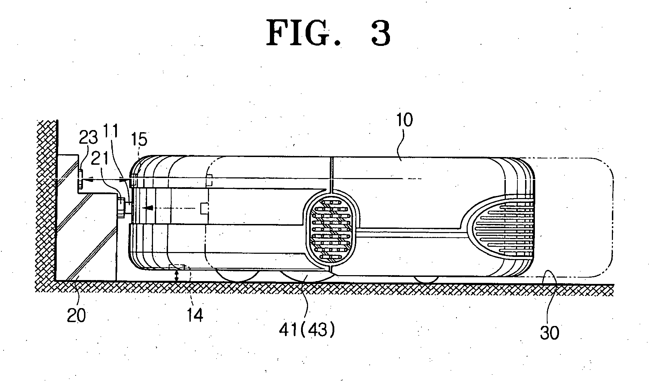

A service robot 10 and a charging apparatus 20 will be described with reference to FIGS. 1 and 3.

FIG. 1 shows the exterior of the service robot. In FIG. 1, the service robot 10 includes connecting terminals 11 corresponding to a charging terminal 21 of the charging apparatus 20 (referring to FIG. 3). A pair of connecting terminals 11 are exposed externally.

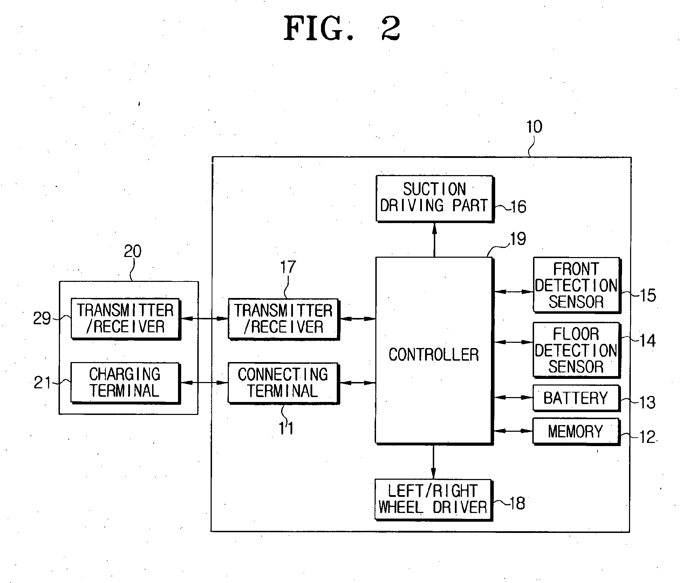

FIG. 2 is a block diagram of the service robot of FIG. 1. As shown in FIG. 2, the service robot 10 includes a memory 12, a battery 13, a floor detection sensor 14, a front detection sensor 15, a suction driving part 16, a transmitter/receiver 17, a left/right wheel driver 18, and a controller 19. The memory 12 stores various data on such things as cleaning times, areas to be cleaned, cleaning routines, or other information. This data is useful for the controller 19 to control the service robot 10 automatically.

The battery 13 provides a driving power source and a certain amount of power source in reserve. Accordingly, the controller 19 frequently checks the capacity of the battery 13 to determine whether the battery 13 should be charged, and to control such that a preset charging mode is used.

The floor detection sensor 14 is provided on a lower part of the service robot 10 and may be configured to face a floor surface 30 (referring to FIG. 3). The floor detection sensor 14 may measure the distance from the floor surface 30, and may be a light emitting and receiving sensor.

The front detection sensor 15 is provided at a side of the service robot 10, and may be installed on the front of the service robot 10 in which the connecting terminals 11 are located. The front detection sensor 15 is used for detecting an obstacle or walls placed in front of or in a traveling direction of the service robot 10, and measuring the distance to the obstacle or walls. The front detection sensor 15 may be a light emitting and receiving sensor.

Signals detected in the sensors 14 and 15 as described above are transmitted to the controller 19. The controller 19 compares the received signals to reference data stored in the memory 12 to obtain information on the state and the position of the service robot 10, and then controls the service robot 10 using the obtained information.

The suction driving part 16 provides a suction force for cleaning the floor surface 30 of the area to be cleaned. Additionally, the suction driving part 16 may include a dust collecting motor.

The transmitter/receiver 17 may be used in order to locate the charging apparatus 20 by communicating with a transmitter/receiver 29 provided on the charging apparatus 20. Additionally, the transmitter/receiver 17 may transmit and/or receive signals to and/or from a remote controller operated by a user. Accordingly, the service robot 10 can be remotely controlled.

The left/right wheel driver 18 selectively drives left and right driving wheels 41 and 43 installed on the lower part of the service robot 10 under the control of the controller 19. The left/right wheel driver 18 may comprise stepping motors connected to the left and right driving wheels 41 and 43, respectively.

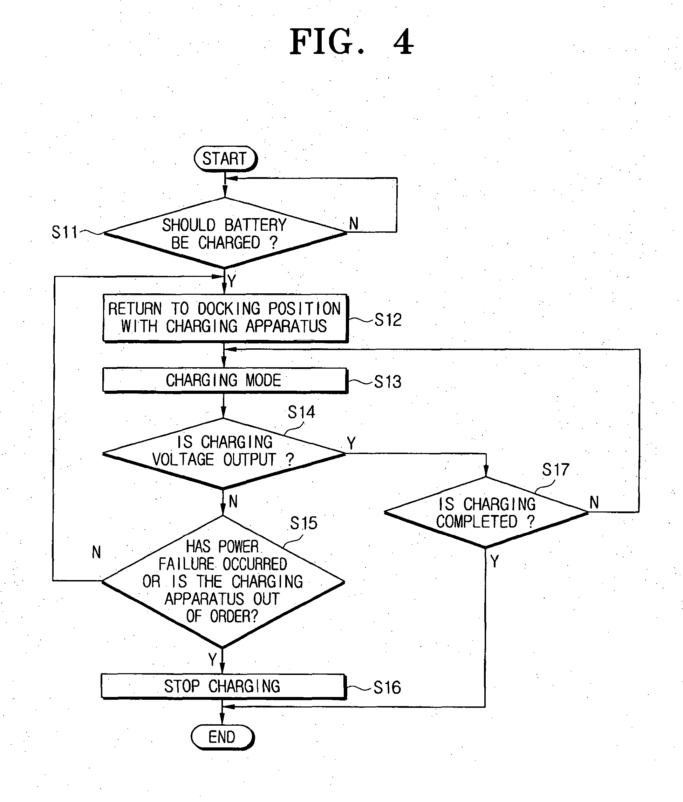

Hereinafter, a method for charging the service robot 10 constructed as described above, according to an exemplary embodiment of the present invention will be described with reference to FIG. 4.

The controller 19 checks the power source capacity of the battery 13 whenever the service robot 10 travels or waits for cleaning, and determines whether the battery 13 should be charged (S11). If it is determined that the battery 13 should be charged, the controller 19 may return the service robot 10 to the docking position, as shown in FIG. 3 (S12). In operation S11, the service robot 10 may locate the charging apparatus 20 by signal exchange between the transmitter/receivers 17 and 29.

If the service robot 10 is returned to the docking position and the connecting terminals 11 are connected to the charging terminal 21, the charging mode may be performed to charge the battery (S13).

The controller 19 checks whether a predetermined charging voltage is applied to the connecting terminals 11 through the charging terminal 21 while charging the battery (S14). In the exemplary embodiment of the present invention, the charging voltage may be about 34V. If the charge voltage is applied, the controller 19 may determine whether charging is completed (S17). If charging is not completed, the process may return to operation S13, and if charging is completed, the service robot 10 may be driven to stop the charging.

If the charging voltage is not applied to the connecting terminal 11, the controller 19 may determine whether power failure has occurred or the charging apparatus is out of order (S15).

If it is determined that power failure has occurred or the charging apparatus is out of order, the controller 19 may stop the attempt to return to the charging state (S16).

Whether power failure has occurred or the charging apparatus is out of order may be determined according to the presence and absence of an inductive signal transmitted from the transmitter/receiver 29 of the charging apparatus 20.

In other words, if the inductive signal of the charging apparatus 20 is present, the controller 19 may determine that power failure does not occur or the charging apparatus is not out of order, and revert the service robot 10 to a docked state with the charging apparatus 20. If the inductive signal of the charging apparatus 20 is not present, the controller 19 may determine that the power failure occurs or the charging apparatus 20 is out of order, and interrupt the attempt to return the service robot 10 to the charging state (S16).

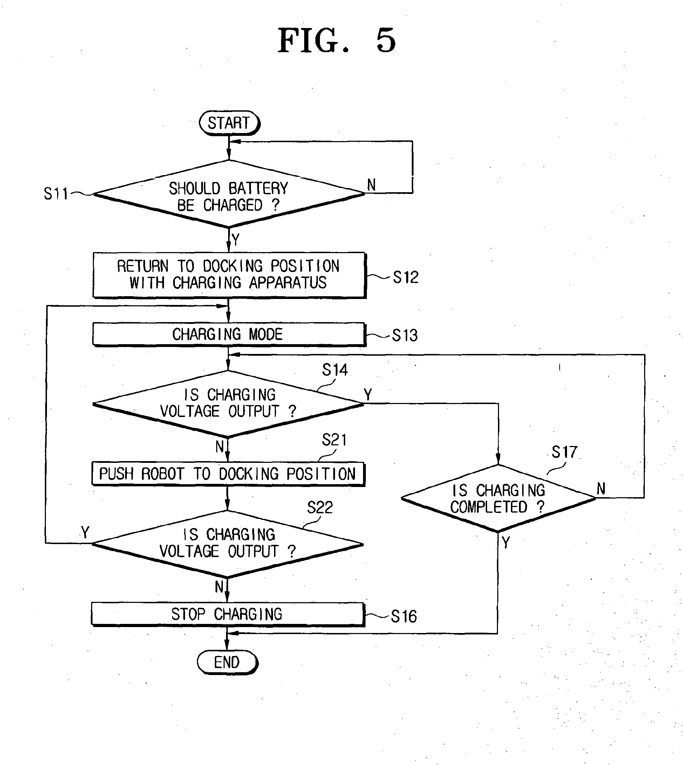

An alternative method for determining whether power failure has occurred or the charging apparatus is out of order is now described with reference to FIG. 5.

This method is provided taking into consideration the situation in which the body of the service robot is slightly twisted due to external shock, which may result in poor contact with the charging apparatus, and thus the predetermined charging voltage is not applied to the connecting terminals 11.

Specifically, the controller 19 pushes the service robot 10 to the front (S21), and then determines whether the charging voltage is input (S22). The front indicates the direction of the charging apparatus, or the direction of the input terminal without change in angles of the wheels. Above operations S21 and S22 may be repeated, for example, twice. If the charging voltage is not input, even through the operations are repeated, the controller 19 may determine that the charging apparatus is out of order, and stop the attempt to return to the charging state (S16). If the charging voltage is input, the process may return to operation S13.

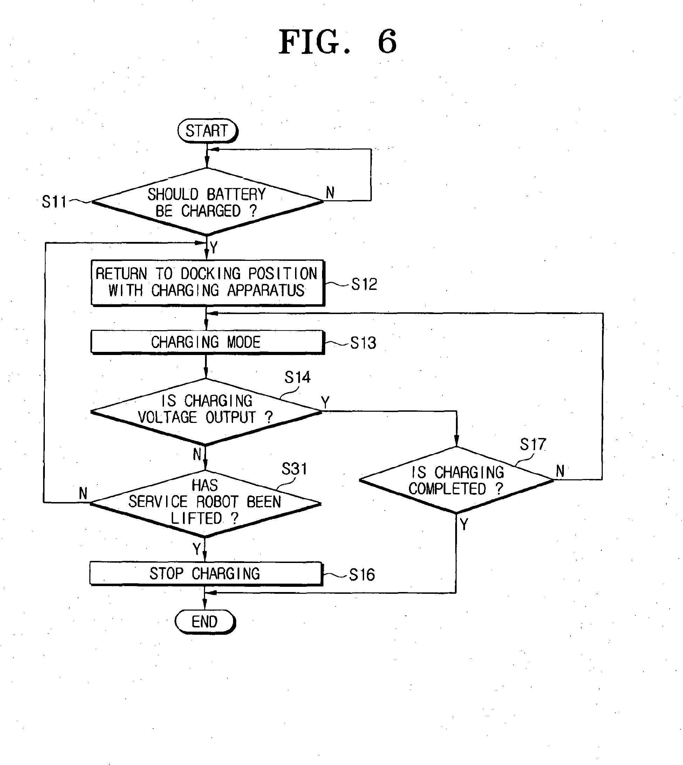

Hereinafter, a method for charging the service robot 10 constructed as described above, according to another exemplary embodiment of the present invention will be described with reference to FIG. 6.

Checking the battery capacity to determine whether the battery needs to be charged, returning the service robot 10 to the docking position to charge the battery, checking whether the predetermined charging voltage is input to the connecting terminals 11 during charging, are performed in the same manner as in above operations S11 to S14 under the control of the controller 19.

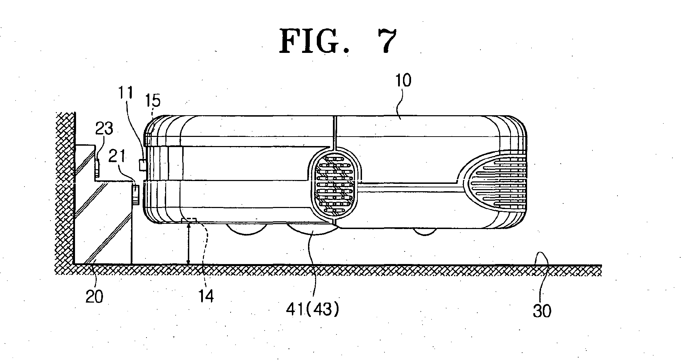

If a user lifts the service robot 10 from the ground, as shown in FIG. 7, the connection between the connecting and charging terminals may be released. Accordingly, the predetermined charging voltage is not applied to the connecting terminals 11. Whether the user has lifted the service robot 10 may be determined by measuring the distance between the service robot 10 and floor surface 30 using the floor detection sensor 14. In other words, if the distance exceeds a predetermined distance from the floor surface based on the location of the wheels of the service robot, it is determined that the user has lifted the service robot 10 (S31). Accordingly, the service robot regards that the user does not wish to charge the battery any more, and stops the attempt to return to the charging state (S16).

In the method for charging the service robot constructed as described above, according to the exemplary embodiments of the present invention it is possible to prevent the continuous attempt to return to the charging state, when power failure occurs, the power supply of the charging apparatus is blocked, or a user intentionally interrupts the charging. Therefore, the discharge of power source may be obstructed.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for charging a service robot, the method comprising:
(a) docking an input terminal (11) of the service robot (10) with an output terminal (21) of a charging apparatus (20), if an available battery power source falls below a predetermined level;
(b) checking (S14) whether a predetermined charging voltage is input to the input terminal of the service robot (10);
(c) determining (S15) whether power failure has occurred or the charging apparatus is out of order, if the charging voltage is not input in step (b); and
(d) interrupting (S16) charging of the battery, if it is determined that power failure has occurred or the charging apparatus (20) is out of order,
wherein step (c) comprises determining that power failure has occurred or the charging apparatus (20) is out of order, if an inductive signal is not output from the charging apparatus (20).

2. The method as claimed in claim 1, wherein step (c) further comprises returning to step (a), if the inductive signal is output from the charging apparatus.

3. The method as claimed in claim 1, wherein step (c) comprises:
(c-1) moving the service robot forward toward the output terminal using a predetermined pressing force; and
(c-2) determining that power failure has occurred or the charging apparatus (20) is out of order, if the charging voltage is not input to the input terminal.

4. The method as claimed in claim 3, wherein step (c-1) is repeated twice or more.

5. The method as claimed in claim 3, wherein step (c-2) further comprises returning to step (b) if the charging voltage is input to the input terminal.

## Patentansprüche

1. Verfahren zum Laden eines Reinigungsroboters, wobei das Verfahren umfasst:
a) Koppeln eines Eingangsanschlusses (11) des Reinigungsroboters (10) mit einem Ausgangsanschluss (21) einer Ladevorrichtung (20), wenn eine verfügbare Batterie-Stromquelle unter einen vorgegebenen Pegel fällt;
b) Prüfen (S14), ob eine vorgegebene Ladespannung in den Eingangsanschluss des Reinigungsroboters (10) eingeleitet wird;
c) Feststellen (S15), ob Stromausfall stattgefunden hat oder ob die Ladevorrichtung defekt ist, wenn in Schritt b) die Ladespannung nicht eingeleitet wird; und
d) Unterbrechen (S16) von Laden der Batterie, wenn festgestellt wird, dass Stromausfall stattgefunden hat oder dass die Ladevorrichtung (20) defekt ist,
wobei Schritt c) umfasst, dass festgestellt wird, dass Stromausfall stattgefunden hat oder dass die Ladevorrichtung (20) defekt ist, wenn kein induktives Signal von der Ladevorrichtung (20) ausgegeben wird.

2. Verfahren nach Anspruch 1, wobei Schritt c) des Weiteren umfasst, dass zu Schritt a) zurückgekehrt wird, wenn das induktive Signal von der Ladevorrichtung ausgegeben wird.

3. Verfahren nach Anspruch 1, wobei Schritt c) umfasst:
c-1) Bewegen des Reinigungsroboters vorwärts zu dem Ausgangsanschluss hin unter Verwendung einer vorgegebenen Druckkraft; und
c-2) Feststellen, dass Stromausfall stattgefunden hat oder dass die Ladevorrichtung (20) defekt ist, wenn die Ladespannung nicht in den Eingangsanschluss eingeleitet wird.

4. Verfahren nach Anspruch 3, wobei Schritt c-1) zweimal oder öfter wiederholt wird.

5. Verfahren nach Anspruch 3, wobei Schritt c-2) des Weiteren umfasst, dass zu Schritt b) zurückgekehrt wird, wenn die Ladespannung in den Eingangsanschluss eingeleitet wird.

## Revendications

1. Procédé de chargement d'un robot de service, le procédé comprenant :
(a) l'arrimage d'un terminal d'entrée (11) du robot de service (10) à un terminal de sortie (21) d'un appareil de chargement (20) si une source d'alimentation à batterie disponible chute sous un niveau prédéterminé ;
(b) la vérification (S14) du fait qu'une tension de chargement prédéterminée est entrée ou non dans le terminal d'entrée du robot de service (10) ;
(c) la détermination (S15) du fait qu'une panne d'alimentation s'est produite ou que l'appareil de chargement est hors service si la tension de chargement n'est pas entrée à l'étape (b) ; et
(d) l'interruption (S16) de la charge de la batterie, s'il est déterminé que la panne d'alimentation s'est produite ou que l'appareil de chargement (20) est hors service,
dans lequel l'étape (c) comprend la détermination du fait que la panne d'alimentation s'est produite ou que l'appareil de chargement (20) est hors service si un signal inductif n'est pas sorti par l'appareil de chargement (20).

2. Procédé selon la revendication 1, dans lequel l'étape (c) comprend en outre le retour à l'étape (a) si le signal inductif est sorti par l'appareil de chargement.

3. Procédé selon la revendication 1, dans lequel l'étape c) comprend :
(c-1) le déplacement du robot de service vers l'avant en direction du terminal de sortie en utilisant une force de pression prédéterminée ; et
(c-2) la détermination du fait que la panne d'alimentation s'est produite ou que l'appareil de chargement (20) est hors service si la tension de chargement n'est pas entrée dans le terminal d'entrée.

4. Procédé selon la revendication 3, dans lequel l'étape (c-1) est répétée deux fois ou plus.

5. Procédé selon la revendication 3, dans lequel l'étape (c-2) comprend en outre le retour à l'étape (b) si la tension de chargement est entrée dans le terminal d'entrée.
